# EUROPEAN PATENT APPLICATION

(11) **EP 4 844 591 A1**
(43) Date of publication of application: **25.11.2026**
(21) Application number: 25177236.4
(22) Date of filing: 19.05.2025
(51) Int. Cl.: G06F 11/3668, G06F 11/3698

(54) **LOCAL TESTING OF CLOUD ENVIRONMENT APPLICATIONS**

(71) Applicant: Barclays Execution Services Limited, London E14 5HP (GB)
(72) Inventor: PATEL,, Chetan, 411014 Pune (IN); SUCHAK,, Dhaval Harishkumar, 411014 Pune (IN); BAPNA,, Tarun Kumar, 411014 Pune (IN); GARG,, Shivangi, 411014 Pune (IN); BHANWADIA,, Kavita, 411014 Pune (IN)
(74) Representative: Carpmaels & Ransford LLP

(57) **Abstract**

There is provided a computer-implemented method for locally testing applications for a cloud environment, for applications dependent upon one or more cloud services in the cloud environment. The method comprises: obtaining an offline emulator based on a testing definition file, wherein the offline emulator is configured to locally execute, and record result data from the execution of, the application for each of the plurality of test cases in a local emulated cloud environment configured to support execution of the application; and executing the offline emulator. Executing the offline emulator comprises: initialising the local emulated cloud environment, wherein the local emulated environment comprises one or more components configured to imitate the functionality of the one or more cloud services in the cloud environment; executing, in the local emulated cloud environment, the application for each test case according to the at least one test scenario; and outputting test result data from the execution of the application; and terminating the local emulated cloud environment.

## Description

### Technical Field

The invention pertains to locally testing applications that are dependent upon one or more cloud services of a cloud environment. In particular, the invention relates to a computer-implemented method, computer, computer program and non-transitory computer readable medium for locally testing such applications, including generating an offline emulator for locally testing such applications.

### Background

In cloud computing engineering and development, application testing often requires deploying the code into a live cloud environment to validate its functionality. This presents technical challenges, as testing cloud-integrated applications depends on interacting with various cloud services that are only fully available within the cloud environment itself. Amazon Web Service (AWS) applications, for example, frequently rely on cloud services such as Amazon Simple Storage Service (S3), Amazon Simple Queue Service (SQS), and Amazon Simple Notification Service (SNS), for which no direct local equivalents are provided by AWS, making it difficult to perform accurate functional tests outside of AWS.

Some cloud services, such as AWS DynamoDB Local, are provided by AWS. However, these only offer limited local testing and there remain gaps when testing applications that depend on multiple cloud services, especially where interactions between services need to be validated.

Another challenge to local testing of applications intended for cloud environments is the manual setup of local test environments. Even when using offline services such as AWS DynamoDB Local, configuring the necessary components correctly each time an application is tested is often complex and error-prone. Differences in local configurations may lead to inconsistent test results, making debugging and validation of the application more difficult. These issues become particularly pronounced in iterative development, where applications are tested frequently and their dependencies on cloud services may change over time. Accordingly, ensuring reliable, repeatable functional testing of cloud applications in a way that accurately reflects the cloud environment remains a key technical challenge.

### Summary

The present invention is defined by the independent claims, with further optional features being defined by the dependent claims.

In a first aspect of the invention, there is provided a computer-implemented method for locally testing an application for a cloud environment, wherein the application is dependent upon one or more cloud services in the cloud environment, and wherein the computer stores a testing definition file, the testing definition file defining a plurality of test cases for the application according to at least one test scenario, the method comprising: obtaining an offline emulator based on the testing definition file, wherein the offline emulator is configured to locally execute, and record result data from the execution of, the application for each of the plurality of test cases in a local emulated cloud environment configured to support execution of the application; and executing the offline emulator, wherein executing the offline emulator comprises: initialising the local emulated cloud environment, wherein the local emulated environment comprises one or more components configured to imitate the functionality of the one or more cloud services in the cloud environment; executing, in the local emulated cloud environment, the application for each test case according to the at least one test scenario; outputting test result data from the execution of the application; and terminating the local emulated cloud environment. In this way, the invention provides an efficient and reliable way of testing applications for cloud environments outside of said environments. In particular, by defining a testing definition file, and using said file to automatically obtain an offline emulator that is configured to initialise a local emulated cloud environment to run the desired tests, preparing the environment for offline testing is made significantly more efficient (as set up is largely performed without human intervention) and reliable (since there is less capacity for introducing errors), whilst still being adaptable according to the nature of the test to be performed. The testing itself may then be performed without network connection (e.g. no-network mode), eliminating dependencies on the cloud environment, network connectivity and third-party components.

In embodiments, obtaining an offline emulator based on the testing definition file comprises generating, by an offline emulator generator, the offline emulator based on the testing definition file. Using an offline emulator generator in this way offers a plug-and-play solution for testing the cloud application that requires very little set up prior to testing commencing, other than preparing the testing definition file. In such embodiments, generating the offline emulator based on the testing definition file may comprise: generating, by the offline emulator generator, a step definition file formed of a plurality of files defining code for executing the offline emulator. In this way, the offline emulator generator is able to automatically generate any files needed to execute the offline emulator, thereby making the local emulated cloud environment used for testing much more reliable and less error prone than if such an environment had been set up manually. This is useful to ensure that test results arise from the application being tested itself, and not a problem with the environment in which the test is being run.

In embodiments, the plurality of files comprises a step file comprising steps corresponding to the at least one test scenario of the testing definition file. In other embodiments, the plurality of files comprises an application test file that defines the execution of the plurality of test cases for the application. In other embodiments, the plurality of files comprises a hook file that defines hooks used by a step file before and after the steps corresponding to the at least one test scenario. In other embodiments, the plurality of files comprises an integration file that defines the integration between a predefined behaviour-driven development framework of the testing definition file and a predefined application development framework of the application. In embodiments, the plurality of files comprises one or more component files corresponding to the one or more components of the local emulated cloud environment. In such embodiments, the one or more component files may comprise one or more of: a data repository component file; a message notification component file; and a message queue component file. In other embodiments, the plurality of files comprises: a local emulated cloud environment file defining static parameters for the one or more components of the local emulated cloud environment. Each of the aforementioned files may be present in any combination, as required by the testing definition file. Together, these files are used to initiate the local emulated cloud environment and then run the test. Advantageously, because these files all stem ultimately from the testing definition file, the files are tailored specifically for the particular test that is being run.

In embodiments, at least one of the one or more cloud services is a data repository service and at least one of the one or more components is a data repository component. In embodiments, at least one of the one or more cloud services is a message notification service and at least one of the one or more components is a message notification component. In embodiments, at least one of the one or more cloud services is a message queue service and at least one of the one or more components is a message queue component. In this way, common cloud services, such as Amazon S3, SNS and SQS are provided in the local emulated cloud environment, and therefore the functionality of these services as it pertains to the application can be tested.

In a second aspect of the invention, there is provided a method of obtaining an offline estimator for locally testing an application for a cloud environment, wherein the application is dependent upon one or more cloud services in the cloud environment, and wherein the computer stores a testing definition file, the testing definition file defining a plurality of test cases for the application according to at least one test scenario, the method comprising: generating, by an offline emulator generator, the offline emulator based on the testing definition file, wherein the offline emulator is configured to locally execute, and record result data from the execution of, the application for each of the plurality of test cases in a local emulated cloud environment configured to support execution of the application. As mentioned previously, using an offline emulator generator in this way offers a plug-and-play solution for testing the cloud application that requires very little set up prior to testing commencing, other than preparing the testing definition file.

In a third aspect of the invention, there is provided a computer for locally testing an application for a cloud environment, the computer configured to perform any method of the first or second aspect of the invention.

In a fourth aspect of the invention, there is provided a computer program for locally testing an application for a cloud environment, wherein the computer program includes instructions that, when executed by a computer, causes the computer to perform any method of the first or second aspect of the invention.

In a fifth aspect of the invention, there is provided a non-transitory computer readable medium for locally testing an application for a cloud environment, wherein the computer readable medium includes instructions that, when executed by a computer, causes the computer to perform any method of the first or second aspect of the invention.

### Brief Description of the Drawings

Embodiments of the invention are described below, by way of example, with reference to the following drawings, in which:
Fig. 1A shows a computer in which the methods of the invention may be implemented. Fig. 1B shows components of the system memory of the computer of Fig. 1A in further detail. Fig. 1C shows components of the storage media of the computer of Fig. 1A in further detail.
Fig. 2A shows typical layers in a cloud computing environment. Fig. 2B shows one or more cloud services of a platform layer of a cloud computing environment.
Fig. 3 shows a local emulated cloud environment having one or more components according to the invention.
Fig. 4 is a flowchart for locally testing an application for a cloud environment according to the invention.
Fig. 5 shows a testing definition file for use with the invention.
Fig. 6 is a flowchart for obtaining an offline emulator based on a testing definition file according to the invention.
Fig. 7A depicts a step definition file comprising a plurality of files that are used to initialise a local emulated cloud environment according to the invention. Fig. 7B depicts a plurality of components files that correspond to a plurality of components of the local emulated cloud environment.
Fig. 8 is a flowchart for executing the offline emulator according to the invention.
Fig. 9 is an example test result data output according to the invention.

### Detailed Description

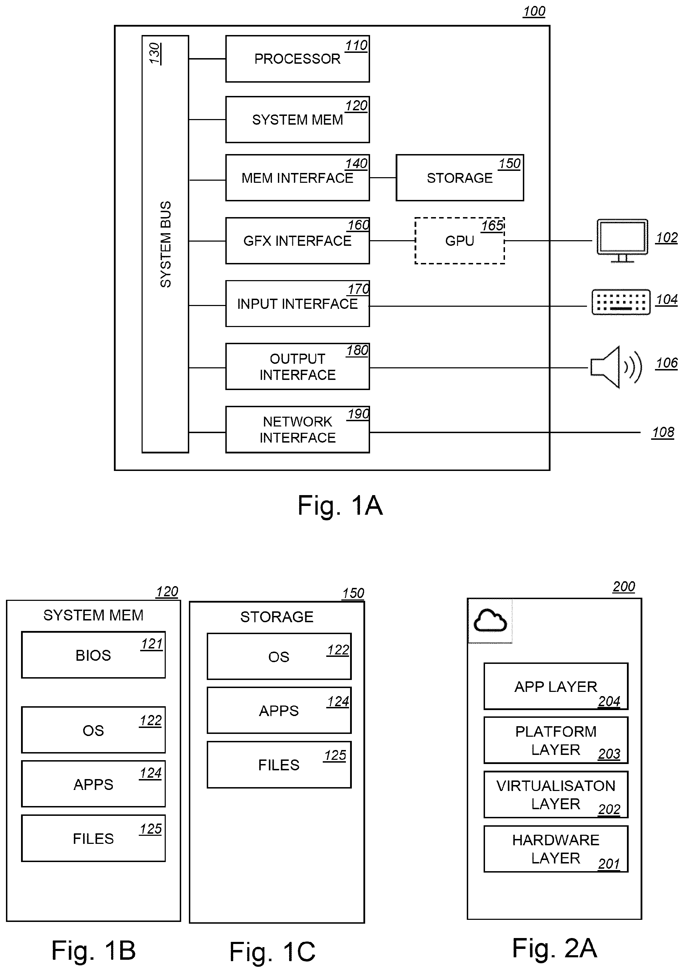

Fig. 1A shows an example computer 100 in which the methods of the invention for locally testing an application for a cloud environment may be implemented. Computer 100 may be embodied as any type of computer, including a server, a desktop computer, a laptop, a tablet, a mobile device, a virtualised computer, and the like. As used herein, "locally testing" means that the testing is performed on the computer 100 itself, using the components of computer 100, rather than within a cloud environment.

Components of computer 100 include, but are not limited to, a processor 110, such as a central processing unit (CPU), system memory 120, and system bus 130. System bus 130 provides communicative coupling for various components of computer 100, including system memory 120 and processor 110. System bus 130 may be or may include an address bus, data bus or control bus. Example system bus architectures include parallel buses, such as Peripheral Component Interconnect (PCI) and Integrated Drive Electronics (IDE), and serial buses, such as PCI Express (PCIe) and Serial ATA (SATA).

System memory 130 is formed of volatile and/or non-volatile memory such as read only memory (ROM) and random-access memory (RAM). ROM is typically used to store a basic input/output system (BIOS), which contains routines that boots the operating system and sets up the components of computer 100, for example at start-up. RAM is typically used to temporarily store data and/or applications that the processor 110 is operating on.

Computer 100 includes other forms of memory, including (computer readable) storage media 150, which is communicatively coupled to the processor 110 through a memory interface 140 and the system bus 130. Storage media 150 may be or may include volatile and/or non-volatile media. Storage media 150 may be or may include removable or non-removable storage media. Storage media 145 may be within computer 100 or external to computer 100 and connected via a universal serial bus (USB) port. Examples storage media 150 technologies include: semiconductor memory, such as RAM, flash memory, solid-state drives (SSD); magnetic storage media, such as magnetic disks; and optical storage, such as hard disk drives (HDD) and CD, CD-ROM, DVD and BD-ROM. Data stored in storage medium 150 may be stored according to known methods of storing information such as computer readable instructions, data structures, applications and the like.

In some embodiments, such as the one shown in Fig. 1A, computer 100 is communicatively coupled to an external display device 102 via a graphics/video interface 160 and system bus 130. Alternatively, computer 100 may have an integrated display (not shown) which is communicatively coupled via the graphics/video interface 160 and system bus 130. In some instances, a discrete graphical processing unit 165 (GPU) may be used in addition to improve graphical and other types of processing, but in other instances the processor 110 may have an onboard GPU or there may be no GPU at all.

Computer 100 also includes an input peripheral interface 170 and an output peripheral interface 180 that are communicatively coupled to the system bus 130. Input peripheral interface is communicatively coupled to one or more input devices 104, for interaction between the computer 100 and a human operator. Example input devices 104 includes a keyboard, a mouse, a touchscreen, and a microphone. In some embodiments, the touchscreen and display may use the same screen. Output peripheral interface 180 is communicatively coupled to one or more output devices 106. Example output devices 106 includes speakers and a printer. The communicative coupling may be wired, such as via a USB port, or wireless, such as over Bluetooth.

Computer 100 may operate in a networked or distributed environment using at least one communication network 108 to one or more remote computers and/or may be communicatively coupled to a cloud environment (also referred to herein as a cloud computing environment). The one or more remote computers may be a personal computer, a server, a router, a peer device, a mobile device, a tablet, or other common network node, and typically includes many or all of the components described above relative to computer system 100. An example cloud environment is discussed further herein with respect to Fig. 2A. The at least one communication network 108 typically includes at least the Internet. Other communication networks 108 may be used including a local area network (LAN) and/or a wide area network (WAN). Further communication networks may be present in various types of computer 100, including cellular networks, such as 3G, 4G LTE and 5G. Computer 100 establishes communication with the networked, distributed and/or cloud environment 108 through network interface 190. In instances where communication has been disconnected or is otherwise not available (e.g. no-network mode), dependencies on the cloud environment 108, on network connectivity through network interface 190 and on other third-party components cannot be used.

As shown in Fig. 1B, system memory 120 may be configured to store several different types of data, including a Basic Input/Output System (BIOS) 121, an operating system (OS) 122, one or more computer applications 124, and one or more files 125. Similarly, as shown in Fig. 1C, storage media 150 may additionally or alternatively be configured to store an OS 122, one or more computer applications 124, and one or more files 125.

Although the invention relates to developing and testing applications that are intended to run in cloud environments rather than on computer 100, typically such applications have to be developed on computer 100 first and then transmitted to the cloud computing environment for testing. To this end, the one or more computer applications 124 may include a build automation tool to assist in the development of applications for the cloud environment. An example build automation tool that can be used with the invention is Gradle. Gradle is well-suited for building applications for cloud environments, particularly Java applications. This is because Gradle offers dependency management, allowing easy management of libraries and frameworks commonly used in cloud applications. Moreover, Gradle has a series of plugins, such as the Spring Boot plugin, which make it easier to build and deploy Java applications tailored for cloud environments. Specifically, using Spring Boot allows the cloud compute service functionality to be recreated on computer 100. Other build automation tools such as Maven could be used instead of Gradle.

### Cloud environments and their applications

Fig. 2A depicts a cloud environment 200 for which an application is to be developed. Cloud environment 200 may be owned and maintained by a party not associated with the computer 100. A commercially available cloud environment 200 may be used, for instance. Examples of commercially available cloud environments include Amazon Web Services (AWS), Microsoft Azure, Google Cloud Platform, and IBM Cloud. The detailed implementations of the invention provided in this description generally relate to AWS, however equivalent cloud services are available from other commercially available cloud environments, and the principles of the invention are compatible with other commercially available cloud environments.

A cloud environment 200 is a distributed computing system that enables dynamic allocation of computing resources, such as processing power, storage, and networking, for specific durations. Cloud environment 200 includes several layers of abstraction, starting from the hardware layer 201, on which sits a virtualisation layer 202, then a platform layer 203, and application layer 204. Hardware layer 201 includes hardware components such as servers, storage arrays, and networking systems, and is often managed across multiple physical locations. Virtualisation layer 202 abstracts the underlying hardware to support the creation and execution of multiple virtual machines or containers. These virtualised instances provide scalable and isolated environments for data processing, storage, and other computational tasks, allowing for efficient hardware resource utilisation and flexible service deployment. Further description of the hardware layer 201 and virtualisation layer 202 is beyond the scope of this application, but the features of such layers are well known in the art.

Platform layer 203 operates on top of the virtualisation layer 202. Within the platform layer 203, cloud environment 200 provides one or more cloud services. A cloud service is a cloud-based utility that provides on-demand computing resources, storage, messaging, or other functionalities within cloud environment 200. Such services act as the building blocks for application development for applications that sit within the application layer 204.

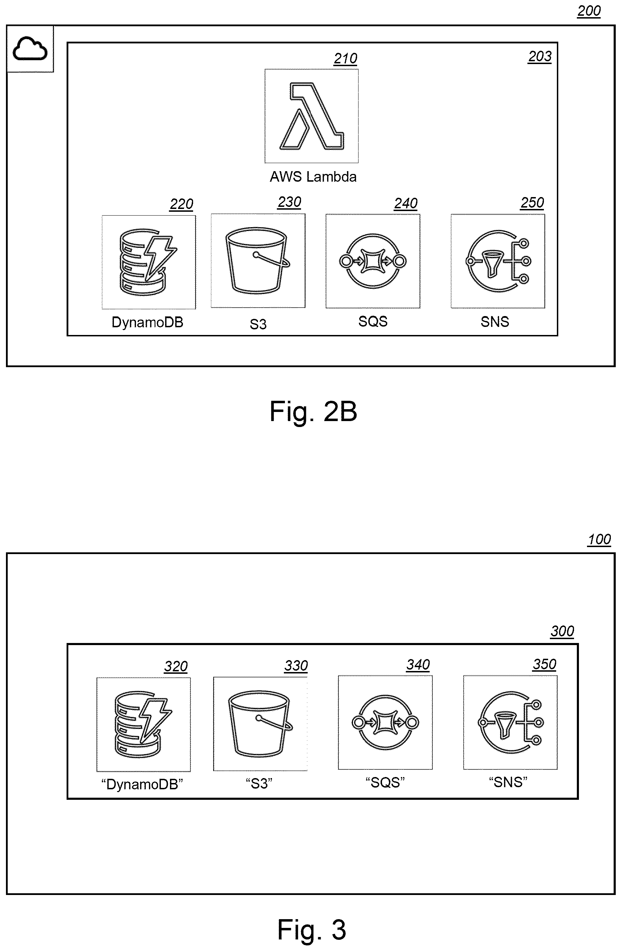

Fig. 2B depicts common types of cloud service within cloud environment 200, including compute service 210, data repository service (Fig. 2 shows a first data repository service 220 and a second data repository service 230), message queue service 240 and message notification service 250. Other types of cloud service, which are not shown in Fig. 2, are also available, including networking services, monitoring and logging services, content delivery services, identity and access management services, machine learning services, container services, application integration services, data analytic services, and the like. Most commercially available cloud environments offer equivalent services. For instance, for machine learning, AWS has SageMaker, Google Cloud has Vertex Al and Microsoft Azure has Azure Machine Learning.

Data repository services, such as the first data repository service 220 and second data repository service 230 in Fig. 2, provide ways for an application to store data in cloud environment 200. The two most common types of data repository service are database services, particularly NoSQL database services, and object storage services. The first data repository service 220 in Fig. 2 is an example of a NoSQL database service, Amazon DynamoDB. Other NoSQL database services include Google Cloud Bigtable and Azure Cosmos DB. As shown in Fig. 2, the second data repository service 220 is an example of an object storage service, Amazon Simple Storage Service (S3). Other examples of object storage services include Google Cloud Storage and Azure Blob Storage.

Message notification service 240 delivers messages to subscribers or endpoints, in real time, and often using a publish-subscribe (pub/sub) model. Message notification service 240 enables applications to broadcast messages (e.g., alerts or updates) to multiple recipients via channels like email, SMS, or HTTP endpoints. Examples of a pub/sub messaging service include Amazon Simple Notification Service (SNS), Google Cloud Pub/Sub, and Azure Notification Hubs.

Message queue service 250 enables asynchronous communication by allowing messages to be sent to a queue, where they are stored until a consuming application retrieves and processes them. These services decouple message producers and consumers, improving scalability and fault tolerance. Distributed message queue services further enhance this by providing high availability, scalability, and durability across multiple locations. Examples include Amazon Simple Queue Service (SQS), Azure Queue Storage, and Google Cloud Pub/Sub (with a queue-like configuration).

Compute service 210 provides serverless processing functionality for running applications. These services support processing workloads from various applications, including web applications, batch processing, and machine learning, and can scale resources dynamically based on demand. Event-driven compute services like AWS Lambda, Google Cloud Functions, and Azure Functions automatically execute code in response to events, simplifying resource management. While using a serverless compute service is not strictly necessary - applications in the application layer 204 can run entirely on virtual machines or containers in the virtualisation layer 202 - serverless options offer advantages like automatic scaling, and reduced infrastructure management overhead.

As shown in Fig. 2B, in some embodiments, when the cloud environment 200 is an AWS environment, the first data repository service 220 is Amazon DynamoDB, the second data repository service 230 is Amazon S3, the message queue service 240 is Amazon SQS and the message notification service 250 is Amazon SNS. In such embodiments, if AWS Lambda is used as compute service 210, the application being developed may be an AWS Lambda function.

Referring back to Fig. 2A, application layer 204 includes custom applications that interact with the platform layer 203 (and optionally the virtualisation layer 202), to address specific technical and commercial problems. These applications are tailored for cloud environment 200 since the cloud services that cloud environment 200 provides are used to build the application, i.e. as modular building blocks. In other words, each application in the application layer 204 is dependent upon one or more cloud services in the cloud environment 200. The applications of application layer 204 typically run on virtual machines, containers, or serverless platforms provided by the virtualisation layer 202 or platform layer 203. Accordingly, as used herein, an "application for a cloud environment" is a reference to an application operating at application layer 204 of cloud environment 200.

Applications in the application layer 204 may utilise programming languages like Java, a popular choice due to its portability, robustness, and extensive ecosystem of frameworks such as Spring Framework, and particularly Spring Boot. A typical Java-based cloud application might call various cloud services to handle tasks like data processing, data storage, etc. For example, an application may interact with the cloud services of the platform layer 203 through APIs to utilise resources like databases (e.g., querying a cloud-hosted relational database), messaging queues (e.g., processing tasks asynchronously), object storage (e.g., storing and retrieving files), and the like.

Applications referred to herein may be Java applications that are built according to a predefined application development framework, specifically a predefined Java application development framework. The predefined Java application development framework may be the Spring Framework, and particularly Spring Boot, which is built on top of the Spring Framework to simplify the setup and development of Spring-based applications.

### Overview of locally testing cloud environment applications

According to the invention, in order to test an application for cloud environment 200 locally on computer 100 (i.e. without using cloud environment 200), it is necessary for the computer 100 to emulate cloud environment 200. This is because the application is dependent upon one or more cloud services in the cloud environment 200. An example of an emulated cloud environment hosted on computer 100, which is also referred to herein as a "local emulated cloud environment", is depicted in Fig. 3. The term "local" is used to denote that the emulation is happening on the computer 100 and not in the cloud environment 200.

Local emulated cloud environment 300 includes one or more components configured to imitate the functionality of the one or more cloud services in the cloud environment 200 that the application being tested is dependent upon. In the example shown in Fig. 3, the application to be tested is dependent upon a first data repository service 220, a second data repository service 230, a message queue service 240, and a message notification service 250. Accordingly, the local emulated cloud environment 300 comprises a first data repository component 320, a second data repository component 330, a message queue component 240 and a message notification component 350.

When the application for testing is dependent on one or more data repository services 220, 230 such as DynamoDB or S3, the one or more components of the local emulated cloud environment 300 includes corresponding one or more data repository components 320, 330. In particular, the one or more components may include a NoSQL database component 320 (which may be referred to as a "local DynamoDB") and an object storage component 330 (which may be referred to as a "local S3").

NoSQL database component 320 (i.e. "local DynamoDB") may be implemented using, for example, AWS DynamoDB Local, which is an in-memory version of Amazon DynamoDB offered by AWS, designed for local testing and development. It allows developers to test database operations without connecting to the real AWS DynamoDB service, improving speed and reducing service use.

Object storage component 330 (i.e. "local S3") may be implemented using, for example, S3Mock. S3Mock is an in-memory simulation of Amazon S3, created by Findify. It allows developers to test file uploads, downloads, and bucket operations locally, avoiding real AWS S3 use and dependencies.

When the application for testing is dependent on a messaging notification service 240, such as SNS, the one or more components of the local emulated cloud environment 300 includes a message notification component 340. In particular, the one or more components may include a pub-sub messaging component (which may be referred to as "local SNS").

Message notification component 340 (i.e. "local SNS") may be implemented, for example, using Bonsai SNS. Bonsai SNS is a mock implementation of Amazon SNS, developed by Gilberto Requena. It allows developers to test message publishing and topic subscriptions locally, without interacting with AWS.

When the application for testing is dependent on a messaging queue service 250, such as SNS, the one or more components of the local emulated cloud environment 300 includes a message queue component 350. In particular, the one or more components may include a distributed message queue component (which may be referred to as "local SQS").

Message queue component 350 (i.e. "local SQS") may be implemented, for example, using ElasticMQ. ElasticMQ is a lightweight, in-memory message queue that mimics Amazon SQS. It is developed by SoftwareMill and enables developers to test Amazon SQS-based workflows without needing an actual AWS SQS instance.

It is appreciated that the above-mentioned implementation examples refer to AWS-based services only. Equivalent implementation examples are available for other cloud services and other commercially available cloud environments.

It is not necessary to include a compute component in local emulated cloud environment 300 to emulate a compute service of cloud environment 200, like AWS Lambda. This is because the application for testing is converted, for example into a Spring Boot application, to ensure it behaves as an AWS Lambda instance. The processing is then run locally, i.e. run on processor 110 of the computer 100.

When the application for testing is dependent on any other service offered by the cloud environment 200, such as the other services discussed elsewhere herein, an equivalent component is provided in the local emulated cloud environment 300. In general, it is only necessary to include components in the local emulated cloud environment 300 which correspond to cloud services that the application to be tested is dependent on. However, manually setting up suitable components for a local emulated cloud environment 300 each time an application is to be tested is arduous, and problems with setting up the components may result in difficulties properly testing the application, or may even inadvertently mask a problem with the application. These issues are particularly pronounced during the development and testing process, because not only are different tests performed, but tests have to be repeated many times, and the application itself may change which services it is dependent on over time, resulting in several local environments being set up for each application. Accordingly, it is desirable to be able to automatically set up a suitable local emulated cloud environment 300 based on the application and the test to be performed on the application.

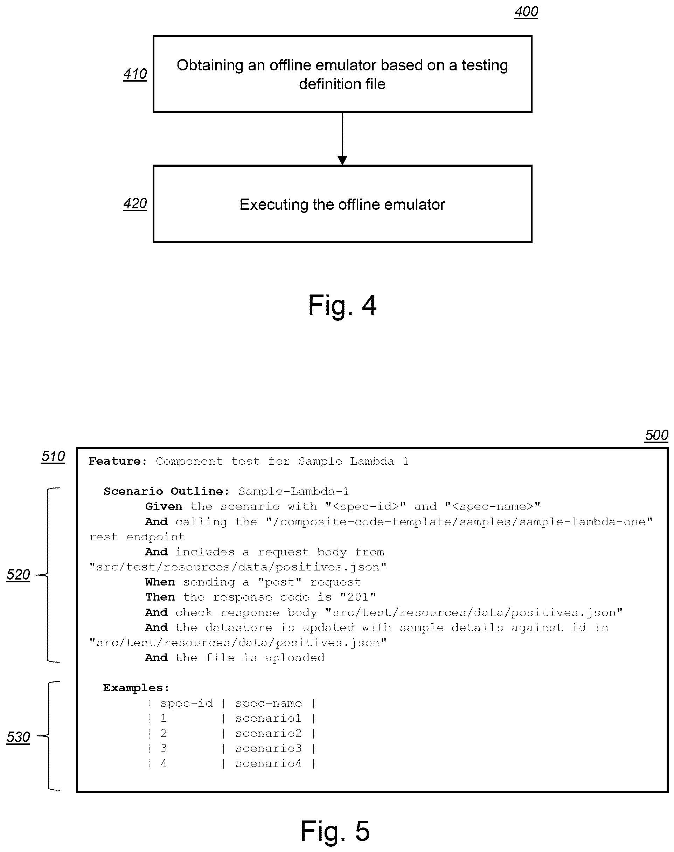

As shown in Fig. 4, there is provided a method 400 for locally testing (i.e. testing at computer 100) an application for cloud environment 200 in accordance with the invention. The method 400 is performed by processor 110 of computer 100. The method 400 includes two steps. First, at step 410, an offline emulator is obtained based on a testing definition file. Then, at step 420, the offline emulator is executed. Further details about each of these steps is described further herein. In some instances, only one of the two steps may be performed at any one time. For instance, obtaining an offline emulator may be performed in isolation. At a later time, the obtained offline emulator may be executed.

Before the method 400 can begin, a testing definition file needs to be prepared, typically by the developer of the application to be tested, or a different tester. Fig. 5 shows an example testing definition file 500. The testing definition file 500 is stored at the computer 100, for example as a file 125 in either the system memory 120 or storage media 150. The testing definition file 500 defines a plurality of test cases 530 for the application 510 (application 510 is referred to in Fig. 5 as a "feature" as it may form part of a higher-level application) according to at least one test scenario 520.

Test scenario 520 defines a series of steps (i.e. a scenario) to be undertaken by the processor 110 to test the application. The steps are typically aimed at testing the function of the application. There may be more than one test scenario 520 if more than one different series of steps (i.e. more than one scenario) is to be tested on the application. Commands such as "Given", "When", and/or "Then" may form part of the steps to define how the application is to be tested. Further commands such as "And" may also be used. The test scenario 520 depicted in Fig. 5 is in Gherkin syntax. Gherkin is a plain-text format used to write structured test cases and behaviour scenarios for applications, following the Given-When-Then structure. As such, the example test scenario 520 of Fig. 5 uses Given, When, and/or Then actions. Gherkin syntax advantageously allows for both developers and testers to define application behaviour in plain text. This makes populating the testing definition file 500 relatively straightforward.

Plurality of test cases 530 defines different test cases or examples to be tested by the processor 110 according to the at least one test scenario 520. To effectuate this, test scenario 520 may include one or more references to the plurality of test cases 530. In particular, test scenario 520 is run for each test case of the plurality of test cases 530 by pulling the respective test case data from the plurality of test cases 530 via the one or more references. For instance, in Fig. 5, the first Given step of the test scenario 520 includes the references "<spec-id>" and "<spec-name>", and the example specid's and spec-name's to populate this are provided in the plurality of test cases 530.

As the content of testing definition file 500 is typically put together by a developer or tester, or may even be produced by a large language model with the appropriate prompt, the testing definition file 500 is in a human readable format, and typically in plain text. Usually, the testing definition file 500 is formatted according to a predefined behaviour-driven development (BDD) framework such as Cucumber. BDD frameworks are natural language software development approaches that focus on the expected behaviour of an application rather than its technical implementation. This is particularly useful for the present invention because the technical implementation is being adapted as part of the testing process. Cucumber specifically allows test scenarios to be written in Gherkin syntax, hence the test scenario 520 being in Gherkin syntax in such embodiments.

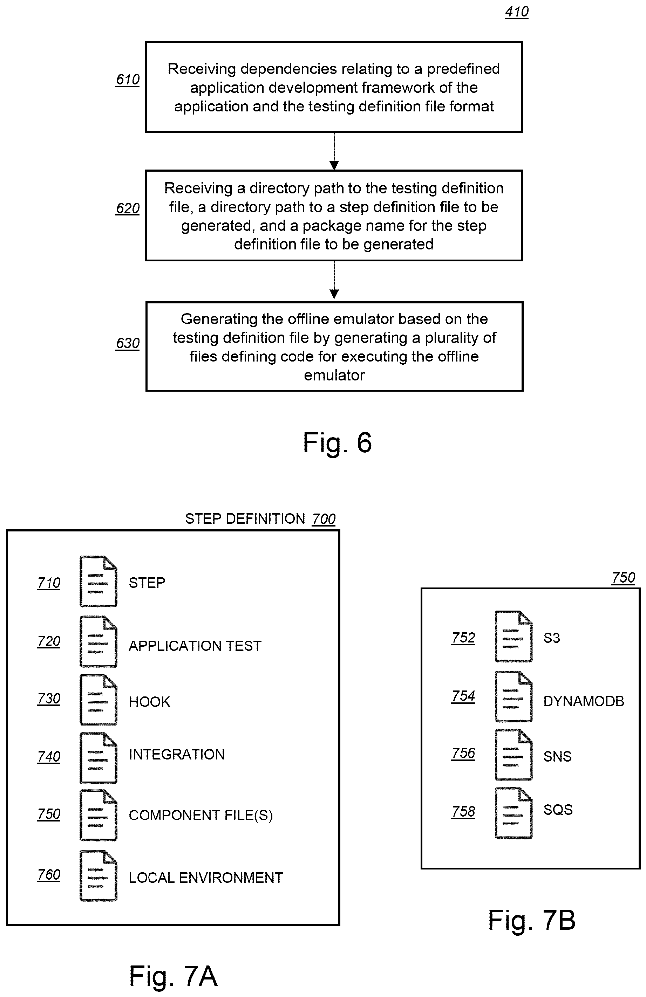

Once the testing definition file 500 is complete, step 410 may be performed. At a high level, step 410 involves obtaining an offline emulator based on the testing definition file 500. The offline emulator is configured to locally execute, and record result data from the execution of, the application for each of the plurality of test cases 530 in a local emulated cloud environment 300 that is configured to support execution of the application 510. By "supporting execution" of the application 510, it is meant that the local emulated cloud environment 300 is specifically configured for the particular test scenario(s) and test cases in the testing definition file 500, and any cloud services that the application is dependent upon. Additional details about what step 410 entails is explained below with respect to Fig. 6.

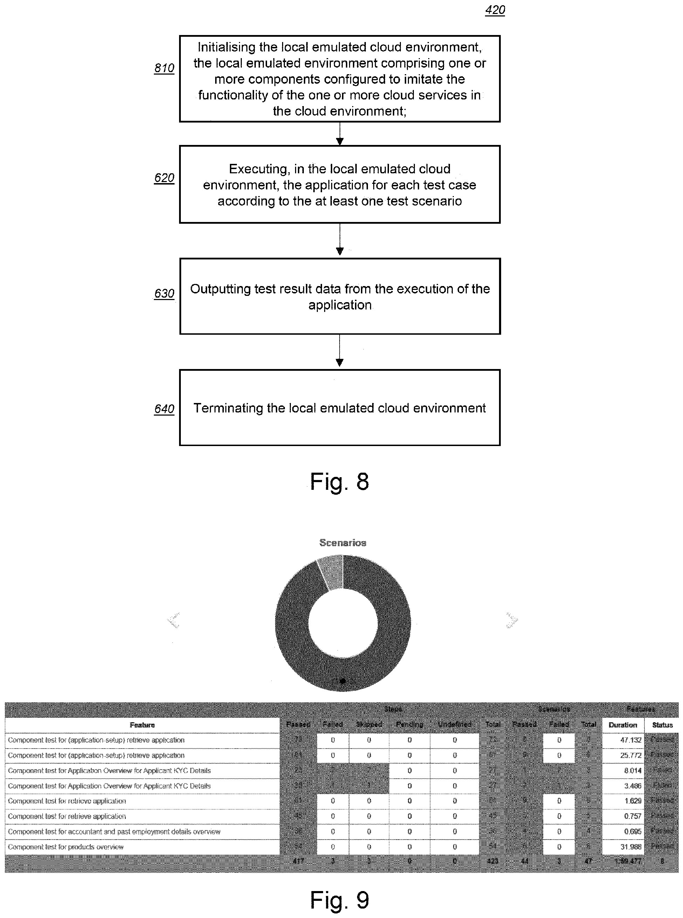

Subsequent to step 410, step 420 is performed. At a high level, step 420 involves executing the offline emulator by: initialising the local emulated cloud environment 300, wherein the local emulated environment 300 comprises one or more components (e.g. 320, 330, 340, 350) configured to imitate the functionality of the one or more cloud services (e.g. 220, 230, 240, 250) in the cloud environment 200; executing, in the local emulated cloud environment 300, the application for each test case (of the plurality of test cases 530) according to the at least one test scenario 520; outputting test result data from the execution of the application; and terminating the local emulated cloud environment 300. Additional details pertaining to step 420 are discussed with respect to Fig. 8.

### Offline emulator generation

As mentioned previously, methods for locally testing an application for cloud environment 200 according to the invention involve the step of obtaining an offline emulator based on testing definition file 500. This step is step 410 of Fig. 4.

In most scenarios, obtaining an offline emulator based on the testing definition file 500 comprises generating, by an offline emulator generator, the offline emulator based on the testing definition file. In some scenarios, a suitable offline emulator may have previously been generated, therefore said pre-existing offline emulator is obtained by retrieving from memory, for instance storage 150.

The offline emulator generator has been developed by the inventors as a plugin for a build automation tool, specifically Gradle, although the principles of the invention also apply to other build automation tools. The offline emulator generator plugin is designed to facilitate the generation of a step definition file, from the testing definition file 500, said file defining code for executing the offline emulator. The step definition file contains a plurality of files. These files may be stored as files 125 in the system memory 120 or on storage media 150 of computer 100. When implemented as a Gradle plugin, the offline emulator generator uses a custom Gradle task (e.g. 'generateCucumberSteps') that automates the process of generating the plurality of files of the step definition file defining code for executing the offline emulator based on the content of the testing definition file 500.

To use the offline emulator generator plugin, the plugin first needs to be installed to the build automation tool. For instance, in Gradle, the following command may be used:

```
        plugins{
                ...
                id 'location.airplane-test-plugin' version '1.0.0.1'
        }
```

In this example, 'location.airplane-test-plugin' is the location that the plugin can be installed from, which may be a remote location (i.e. not local to computer 100) as shown in this example, or may be locally stored (i.e. in system memory 120 or on storage media 150). Once installed, the offline emulator generator plugin may automatically add dependencies for implementing local emulated cloud environments 300. For instance, the following dependencies may be added:

```
dependencies {
                ...
                testImplementation 'com.amazonaws:DynamoDBLocal:2.0.0'
                testImplementation 'org.elasticmq:elasticmq-rest-sqs_2.13'
                testImplementation 'io.github.gilbertojrequena:bonsai-sns'
                testImplementation 'io.findify:s3mock_2.13"
        }
```

In this example, the first dependency is for NoSQL database component 320 (i.e. "local DynamoDB"), the second dependency is for message queue component 350 (i.e. "local SQS"), the third dependency is for a message notification component 340 (i.e. "local SNS"), and the fourth dependency is for object storage component 330 (i.e. "local S3"). In this example, the dependencies are for specific example implementations of the components of local emulated cloud environment 300 discussed elsewhere herein.

Fig. 6 provides further detail of how an offline emulator is generated by the offline emulator generator based on the testing definition file 500 (i.e. further detail of step 410). As mentioned, the generation involves generating a step definition file (formed of a plurality of files, therefore sometimes referred to herein as a step definition package) defining code for executing the offline estimator. This step is shown as the final step of Fig. 6, step 630. There are some pre-requisite steps that should be performed before step 630 can occur, as shown by steps 610 and 620. The steps shown in Fig. 6 are performed by processor 110 of computer 100.

In step 610, the offline emulator generator (i.e. the plugin) receives a plurality of dependencies relating to a predefined application development framework according to which the application is built and/or the testing definition file format. As discussed elsewhere herein, for a Java application, the predefined Java application development framework may be the Spring Framework, and specifically Spring Boot. As also discussed previously, the testing definition file 500 may be formatted according to a predefined BDD framework such as Cucumber. The dependencies may be received by computer 100 from manual input by the developer or tester (or in some instances the dependencies may be received from the offline emulator generator automatically). Below is an example of the dependencies that may be received as part of step 610:

```
        dependencies {
                ...
                testImplementation 'io.cucumber:cucumber-java:7.13.0'
                testImplementation 'io.cucumber:cucumber-junit:7.13.0'
                testImplementation 'io.cucumber:cucumber-junit-platform-
        engine:7.13.0'
                testImplementation 'io.cucumber:cucumber-spring:7.13.0'
                testImplementation 'org.junit.platform:junit-platform-
        suite:1.9.3'
                testImplementation'org.springframework.boot:spring-boot-
        starter-test:3.1.1'
                testImplementation 'com.amazonaws:DynamoDBLocal:2.0.0'
        //Optional as it will be automatically added by this plugin
                testImplementation 'org.elasticmq:elasticmq-rest-sqs_2.13'
        //Optional as it will be automatically added by this plugin
                testImplementation 'io.github.gilbertojrequena:bonsai-sns'
        //Optional as it will be automatically added by this plugin
                testImplementation 'io.findify:s3mock_2.13' //Optional as it
        will be automatically added by this plugin
        }
```

As shown in this example, in addition to a plurality of dependencies relating to the testing definition file format, i.e. Cucumber, and the predefined application development framework, i.e. Spring Boot, there may be other dependencies added in step 610. For instance, a dependency may be added to define a unified test suite, such as JUnit Platform Suite. The example above shows a dependency for JUnit Platform Suite version 1.9.3 being added. Additionally, as shown in the example, dependencies for implementing local emulated cloud environments 300 may also be added in step 610, although this is not required since the offline emulator generator may automatically add these dependencies when installed.

Subsequently, in step 620, the offline emulator generator (i.e. the plugin) receives several inputs at computer 100. Such inputs include a directory path to the testing definition file 500, a directory path to a step definition file to be generated, and a package name for the step definition file to be generated. The directory path for the testing definition file 500 points to the file 125 in system memory 120 or storage media 150 that corresponds to the testing definition file 500. The directory path for the step definition file points to a different file 125 in system memory 120 or storage media 150 where the step definition file is to be stored. Finally, the package name is chosen to provide an indication of the application and/or test scenarios to be performed. The inputs are usually manually input by the developer or tester, and may be input by the developer at the same time as invoking step 630. For instance, the developer may use the following command:

```
        generateCucumberSteps{
                featureDirPath = 'src/test/resources'
                stepDefDirPath =
        'src/test/java/com/company1/sb/mae/stepdefinition'
                testPackageName = 'com.location.stepdefinition'
        }
```

In this example, the command "generateCucumberSteps" invokes step 630 based on the directory path to the testing definition file 500 ("featureDirPath"), the directory path to a step definition file to be generated ("stepDefDirPath") and the package name for the step definition file to be generated ("testPackageName").

Once step 630 is invoked by the developer though an appropriate command (i.e. "generateCucumberSteps" in the example above) or other input into computer 100, the offline emulator generator (i.e. the plugin) generates a step definition file. The step definition file contains a plurality of files defining code for executing the offline emulator. Accordingly, the step definition file may also be referred to as a step definition package. As mentioned, the step definition file and/or the plurality of files may be stored as files 125 in system memory 120 or storage media 150.

The step definition file may contain Glue code for the BDD framework being used. Glue code is used to map Gherkin test steps from the at least one test scenario 520 of the testing definition file 500 to executable code, allowing the offline emulator to set up and run processor executable test scenarios automatically from the plain-text scenarios in the testing definition file 500. When the developer invokes the offline emulator generator (e.g. via the command "generateCucumberSteps"), the offline emulator generator creates multiple files containing Glue code that binds the offline emulator's logic to BDD test cases. This ensures executable code for the tests to be performed on the application can be efficiently and dynamically generated from tests written in plain-text format, without introducing further errors when initialising the local emulated cloud environment. The BDD framework (e.g., Cucumber) then executes the tests using the generated Glue code, enabling automation of the desired tests within the local emulated cloud environment once initialised.

The step definition file may be written in Java, specifically Java-based Glue code. Using Java ensures integration with a Java application, compatibility with Cucumber, and efficient execution. This allows test automation to interact directly with the application's components while keeping the chosen BDD framework effective and scalable.

Fig. 7A depicts an example step definition file 700 formed of a plurality of files generated by the offline emulator generator based on the testing definition file 500. The plurality of files 700 shown in Fig. 7A includes a step file 710, an application test file 720, a hook file 730, an integration file 740, one or more component files 750, and a local emulated cloud environment file 760. Together the plurality of files of the step definition file 700 form the offline emulator for execution by the processor 110 of computer 100. Each of the files provides a different function for testing an application locally on the computer 100.

Step file 710 comprises steps corresponding to the at least one test scenario 520 of the testing definition file 500. Additionally, the step file 710 includes hooks that are used before and after the steps corresponding to the at least one test scenario 520 (e.g. @BeforeAll and @Afterall). The step file 710 also contains actions corresponding to the actions defined in the at least one test scenario 520 using Gherkin. For example, the step file 710 may contain Given, When, and/or Then actions (e.g. @Given, @When, @Then), as well as And actions (e.g. @And). An example step file 710 with the mentioned features is shown below:

```
        package com.location.stepdefinition;
        import io.cucumber.java.en.*;import io.cucumber.java.*;import
        com.location.stepdefinition.BeforeAllAfterAll;
        public class Steps {
        @BeforeAll
        public static void setupPrerequisites() throws Exception {
        BeforeAllAfterAll.beforeAll();
        }
        @AfterAll
        public static void shutDownDB() throws Exception {
        BeforeAllAfterAll.afterAll();
        }
        @Before
        public void setupBefore() throws Exception {
        }
        @After
        public void setupAfter() throws Exception {
        }
             @Given("the scenario with {string} and {string}")
             public void theScenarioWithAnd(String args1, String args2){
           }
             @When("the user sends a {string} request")
             public void theUserSendsARequest(String args1){
           }
             @And("a unique journey id is added to request header if
        provided by UI")
             public void
        aUniqueJourneyIdIsAddedToRequestHeaderIfProvidedByUi() {
           }
             @And("includes a request body from {string}")
             public void includesARequestBodyFrom(String args1){
           }
             @And("the DLQ publish entry was {string} with retry count of
        {string}")
             public void theDlqPublishEntryWasWithRetryCountOf(String args1,
        String args2){
           }
             @And("the Product failed to emit to the queue with max retry
        count {string}")
             public void
        theProductFailedToEmitToTheQueueWithMaxRetryCount(String args1){
           }
             @And("the event publish to DLQ is from {string}")
             public void theEventPublishToDlqIsFrom(String args1){
           }
             @And("the product datastore is updated with product details
        against application id in {string} with max retry count {string}")
             public void
        theProductDatastoreIsUpdatedWithProductDetailsAgainstApplicationIdI
        nWithMaxRetryCount(String args1, String args2){
           }
             @And("the product event is emitted with correct application id
        in {string} with max retry count {string}")
             public void
        theProductEventIsEmittedWithCorrectApplicationIdInWithMaxRetryCount
        (String args1, String args2){
           }
             @And("the response body is from {string}")
             public void theResponseBodyIsFrom(String args1){
           }
             @And("the response headers is from {string}")
             public void theResponseHeadersIsFrom(String args1){
           }
             @And("the user calls the {string} rest endpoint")
             public void theUserCallsTheRestEndpoint(String args1){
           }
             @Then("the response code is {string}")
             public void theResponseCodeIs(String args1){
           }
             @Then("the response code is {string} with max retry count
        {string}")
             public void theResponseCodeIsWithMaxRetryCount(String args1,
        String args2){
           }
        }
```

Application test file 720 defines how the execution of the plurality of test cases 530 is to be performed for the application. In particular, the application test file 720 defines the execution of the plurality of test cases 530 for the application as a unified test suite, such as JUnit Platform. For example, the application test file 720 may contain @Suite class-level annotation, mark the class as executable in a single unit, and contain @SelectClasspathResource annotation that specifies a classpath resource to select when running a test suite. Additionally, the application test file 720 may initiate the predefined BDD framework, such as Cucumber, being used with the unified test suite. An example application test file 720 is as follows:

```
        package com.location.stepdefinition;
        import io.cucumber.core.options.Constants;
        import org.junit.platform.suite.api.ConfigurationParameter;
        import org.junit.platform.suite.api.SelectClasspathResource;
        import org.junit.platform.suite.api.Suite;
        import static
        io.cucumber.junit.platform.engine.Constants.PLUGIN_PROPERTY_NAME;
        @Suite
        @SelectClasspathResource("features")
        @ConfigurationParameter(key =
        Constants.PLUGIN_PUBLISH_QUIET_PROPERTY_NAME, value = "true")
        @ConfigurationParameter(key = PLUGIN_PROPERTY_NAME,
        value="html:build/reports/tests/integrationTest/cucumber.html,
        json:build/reports/tests/integrationTest/cucumber.json")
        class ApplicationTest {
        }
```

Hook file 730 defines hooks used by the step file 710 before and after the steps corresponding to the at least one test scenario 520 (i.e. the steps contained within step file 710). In particular, the hook file 730 comprises a before hook (@BeforeAll) that defines steps to be performed before the steps corresponding to the at least one test scenario 520. Such steps include starting one or more of the components of the local emulated cloud environment 300. The hook file 730 also comprises an after hook (@AfterAll) that defines steps performed after the steps corresponding to the at least one test scenario 520. Such steps include stopping one or more of the components of the local emulated cloud environment 300. An example hook file 730 is provided below:

```
        package com.location.stepdefinition;
        public class BeforeAllAfterAll {
             public static void beforeAll() {
                   try {
                        DynamoDBLocalServer.startDynamoDBLocalServer();
                   } catch (Exception e) {
                        System.err.printin("Error starting DynamoDBLocalServer"
        + e.getMessage());
                   }
                   try {
                        SQSLocalServer.startSQSLocalServer();
                   } catch (Exception e) {
                        System.err.printin("Error starting SQSLocalServer" +
        e.getMessage());
                   }
                   try {
                        SNSLocalServer.startSNSLocalServer();
                   } catch (Exception e) {
                        System.err.printin("Error starting SNSLocalServer" +
        e.getMessage ()) ;
                   }
                   try {
                        S3LocalServer.startS3LocalServer();
                   } catch (Exception e) {
                        System.err.printin("Error starting S3LocalServer" +
        e.getMessage());
                   }
              }
             public static void afterAll() {
                   try {
                        DynamoDBLocalServer.stopDynamcDBLocalServer();
                   } catch (Exception e) {
                        System.err.printin("Error stopping DynamoDBLocalServer"
        + e.getMessage());
                   }
                   try {
                        SQSLocalServer.stopSQSLocalServer();
                   } catch (Exception e) {
                        System.err.println("Error stopping SQSLocalServer" +
        e.getMessage());
                   }
                   try {
                        SNSLocalServer.stopSNSLocalServer();
                   } catch (Exception e) {
                        System.err.println("Error stopping SNSLocalServer" +
        e.getMessage());
                   }
                   try {
                        S3LocalServer.stopS3LocalServer();
                   } catch (Exception e) {
                        System.err.println("Error stopping S3LocalServer" +
        e.getMessage());
                   }
              }
        }
```

Integration file 740 defines the integration between a predefined BDD framework of the testing definition file 500 (e.g. Cucumber) and a predefined application development framework of the application, particularly a predefined Java application development framework such as Spring Framework or Spring Boot. Converting to Spring Boot using integration file 740 allows the functionality of the compute service, e.g. AWS Lambda, to be recreated in the local environment for the application. Integration file 740 contains annotation (e.g. @CucumberContextConfiguration) that integrates the BDD framework with the development framework of the application.

```
        package com.location.stepdefinition;
        import io.cucumber.spring.CucumberContextConfiguration;
        @CucumberContextConfiguration
        public class CucumberSpringConfiguration {
        }
```

One or more component files 750 correspond to the one or more components of the local emulated cloud environment 300. For each component of the local emulated cloud environment 300 for testing the application, there is a corresponding component file. Accordingly, the number of component files 750 is consistent with the number of cloud services that the application is dependent on. Typically, the one or more component files 750 include three or four component files: a first data repository component file; an optional second data repository component file different from the first data repository component file; a message notification component file; and a message queue component file.

Fig. 7B shows an example of one or more component files 750 corresponding to the local emulated cloud environment 300 of Fig. 3. In Fig. 3, there are four components, a NoSQL database component 320 (i.e. "local DynamoDB"), object storage component 330 (i.e. "local S3"), message notification component 340 (i.e. "local SNS"), and message queue component 350 (i.e. "local SQS") 350. Accordingly, the one or more component files 750 in Fig. 7B includes four components: object storage component file 752 ("S3"); NoSQL database component file 754 ("DYNAMODB"); message notification component file 756 ("SNS"); and message queue component file 758 ("SQS"). Each component file contains start and stop methods for the component to which the component file relates.

An example of object storage component file 752 ("S3") is shown below:

```
        package com.location.stepdefinition;
        import io.findify.s3mock.S3Mock;
        public class S3LocalServer {
             private static S3Mock s3MockServer;
             public static void startS3LocalServer() throws Exception {
                   s3MockServer = new
        S3Mock.Builder().withPort(EnvironmentConstants.S3_LOCAL_PORT).withI
        nMemoryBackend().build();
                   s3MockServer.start();
              }
             public static void stopS3LocalServer() throws Exception {
                   s3MockServer.stop();
              }
        }
```

An example of NoSQL database component file 754 ("DYNAMODB") is shown below:

```
        package com.location.stepdefinition;
        import com.amazonaws.services.dynamodbv2.local.main.ServerRunner;
        import
        com.amazonaws.services.dynamodbv2.local.server.DynamoDBProxyServer;
        public class DynamoDBLocalServer {
             private static DynamoDBProxyServer dynamoDBLocalProxyServer;
             public static void startDynamoDBLocalServer() throws Exception
        {
                  dynamoDBLocalProxyServer =
        ServerRunner.createServerFromCommandLineArgs(new String[ ]{"-
        inMemory", "-port",
        String.valueOf (EnvironmentConstants.DYNAMO LOCAL PORT) }};
                  dynamoDBLocalProxyServer.start();
              }
             public static void stopDynamoDBLocalServer() throws Exception {
                  dynamoDBLocalProxyServer.stop();
              }
        }
```

An example of message notification component file 756 ("SNS") is shown below:

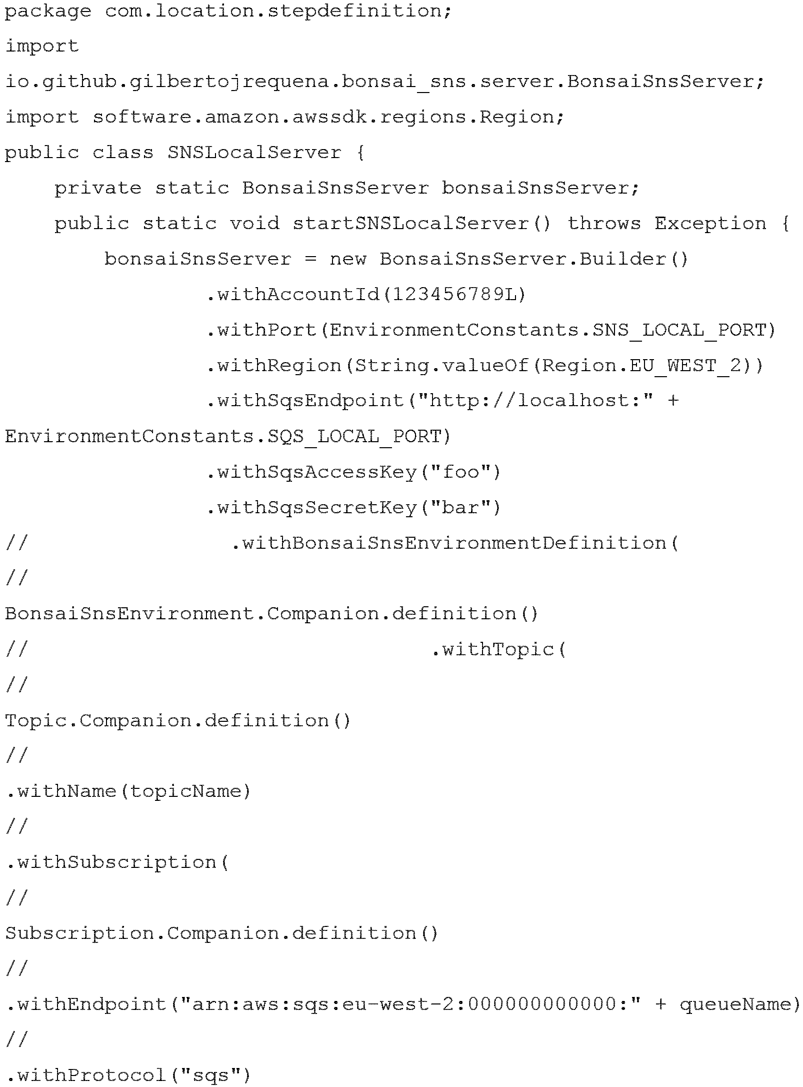

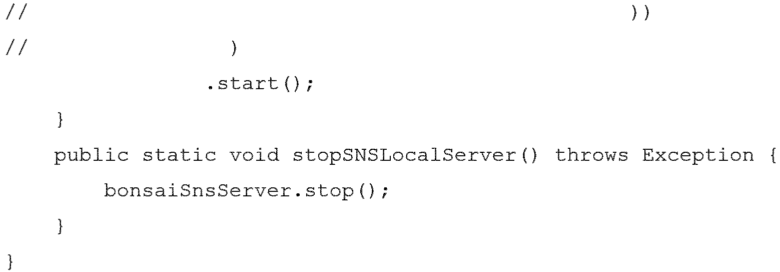

An example of message queue component file 758 ("SQS") is shown below:

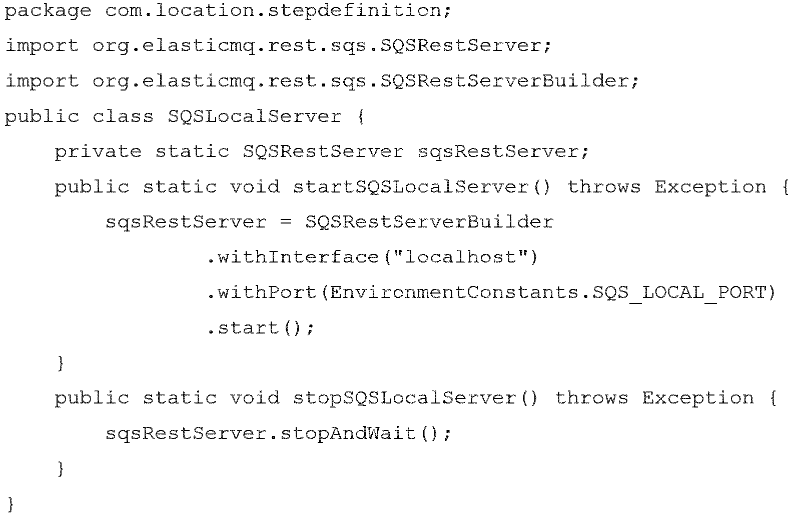

Returning to Fig. 7A, local emulated cloud environment file 760 defining static parameters for the one or more components of the local emulated cloud environment 300. The static parameters may include parameters, such as an access key identifier, secret access key and/or session token, to generate random ports for one or more of the components of the local emulated cloud environment 300. An example of local emulated cloud environment file 760 is below:

```
        package com.location.stepdefinition;
        import java.io.IOException;
        import java.net.ServerSocket;
        public class EnvironmentConstants {
             public static String ACCESS_KEY_ID =
        System.getenv("ACCESS_KEY_ID");
             public static String SECRET_ACCESS_KEY =
        System.getenv("SECRET_ACCESS_KEY");
             public static String
        SESSION_TOKEN=System.getenv_("SESSION_TOKEN") ;
             public static String RUN_ENVIRONMENT =
        System.getenv("RUN_ENVIRONMENT") ;
             private static int getRandomPort() {
                   try (ServerSocket s = new ServerSocket(0)) {
                        return s.getLocalPort();
                   } catch (IOException e) {
                        throw new RuntimeException ("Can't get random port");
                   }
              }
             public static int DYNAMO_LOCAL_PORT = getRandomPort();
             public static int SQS_LOCAL_PORT = getRandomPort();
             public static int SNS_LOCAL_PORT = getRandomPort();
             public static int S3_LOCAL_PORT = getRandomPort();
        }
```

### Testing using offline emulator

As mentioned previously, methods for locally testing an application for cloud environment 200 according to the invention involve the step of executing the offline emulator. This step is shown at step 420 of Fig. 4, which occurs after generating or otherwise obtaining the offline emulator based on the testing definition file 500 in step 410. In general, executing the offline emulator makes use of the plurality of files 700 generated by the offline emulator generator using the method discussed with respect to Fig. 6.

Fig. 8 depicts the steps that occur when the offline emulator is executed by processor 110 of computer 100. In particular, as shown in step 810, the local emulated cloud environment (e.g. as shown by local emulated cloud environment 300 of Fig. 3) is first initialised. As discussed previously, the local emulated cloud environment comprises one or more components configured to imitate the functionality of the one or more cloud services in the cloud environment. These components are initialised by executing the before hook in hook file 730. Executing the before hook causes the one or more of the components of the local emulated cloud environment to be started. This process also involves use of the corresponding component files, i.e. the one or more component files 750, since these contain the start processes for the respective components. The local emulated cloud environment file 760 may also be used to generate random ports for one or more of the components of the local emulated cloud environment 300.

In the next step 820, the application is executed in the local emulated cloud environment for each test case of the plurality of test cases 530 according to the at least one test scenario 520. To achieve this, the step file 710 is used which causes code corresponding to the at least one test scenario 520 of the testing definition file 500 to be executed by the processor 110. In an example where there are two test scenarios, and eight test cases, the application may be executed for the first test scenario with each of the eight test cases, then the second scenario with each of the eight test cases. Execution of each of the test cases may be performed sequentially or in parallel by processor 110. In order to perform the execution of step 820, the application test file 720, which defines how the execution of the plurality of test cases is to be performed for the application, is first used to initiate a unified test suite with a predefined BDD framework such as Cucumber. Integration file 740 is then used during the execution to covert between the predefined BDD framework and a predefined Java application development framework such as Spring Framework or Spring Boot. Converting to Spring Boot using integration file 740 causes the functionality of the compute service, e.g. AWS Lambda, to be recreated in the local emulated cloud environment 300.

Then, at step 830, test result data from the execution of the application is output. The output may take the form of an email to the developer. Additionally or alternatively, the output may take the form of an alert or notification for the developer via external display device 102 and graphics/video interface 160. The test result data may include an indication of the number of test cases of the plurality of test cases 520 that passed and/or failed. The test result data may also include a timestamp corresponding to the time taken to run the plurality of test cases 520. For example, the output may be:
Tests passed: 519 out of 519 tests - 17 sec 190 ms

For the output, the test result data may be arranged in a table. Additionally or alternatively, graphical elements may be used to visually display the number of test cases of the plurality of test cases 520 that passed and/or failed. A further example test result data output is shown in Fig. 9.

Finally, at step 840, the local cloud environment 300 is terminated. Terminating the local emulated cloud environment comprises executing an after hook of the hook file 730, since the after hook comprises stop component steps for the one or more components. This process also involves use of the corresponding component files, i.e. the one or more component files 750, since these contain the stop processes for the respective components. The purpose of terminating the local cloud environment 300 is so that it is not inadvertently used again for a different testing definition file 500 or application, which would be inappropriate since the local cloud environment 300 is specifically tailored for the testing definition 500 it was generated based on.

### General

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following list provides embodiments of the invention and forms part of the description. These embodiments can be combined in any compatible combination beyond those expressly stated. The embodiments can also be combined with any compatible features described herein:
1. A computer-implemented method for locally testing an application for a cloud environment, wherein the application is dependent upon one or more cloud services in the cloud environment, and wherein the computer stores a testing definition file, the testing definition file defining a plurality of test cases for the application according to at least one test scenario, the method comprising: obtaining an offline emulator based on the testing definition file, wherein the offline emulator is configured to locally execute, and record result data from the execution of, the application for each of the plurality of test cases in a local emulated cloud environment configured to support execution of the application; and executing the offline emulator, wherein executing the offline emulator comprises: initialising the local emulated cloud environment, wherein the local emulated environment comprises one or more components configured to imitate the functionality of the one or more cloud services in the cloud environment; executing, in the local emulated cloud environment, the application for each test case according to the at least one test scenario; outputting test result data from the execution of the application; and terminating the local emulated cloud environment.
2. The method of embodiment 1, wherein the application is a Java application.
3. The method of embodiment 1 or 2, wherein the application is built according to predefined application development framework.
4. The method of embodiment 3, wherein the predefined application development framework is the Spring Framework, optionally Spring Boot.
5. The method of any preceding embodiment, wherein the testing definition file is formatted according to a predefined behaviour-driven development, BDD, framework.
6. The method of embodiment 5, wherein the BDD framework is Cucumber.
7. The method any preceding embodiment, wherein the testing definition file is in a human readable format.
8. The method any preceding embodiment, wherein the testing definition file is in plain text.
9. The method of embodiment 8, wherein the at least one test scenario is in Gherkin format.
10. The method of embodiment 8, wherein the at least one test scenario includes Given, When, and/or Then actions.
11. The method of any preceding embodiment, wherein obtaining an offline emulator based on the testing definition file comprises generating, by an offline emulator generator, the offline emulator based on the testing definition file.
12. The method of embodiment 11, wherein the offline emulator generator is a plugin for a build automation tool.
13. The method of embodiment 12, wherein the build automation tool is Gradle.
14. The method of any one of embodiments 11 to 13, wherein generating the offline emulator based on the testing definition file comprises: generating, by the offline emulator generator, a step definition file formed of a plurality of files defining code for executing the offline emulator.
15. The method of embodiment 14, wherein the plurality of files contain Glue code for a predefined BDD framework (optionally the same BDD framework mentioned in embodiments 5 or 6).
16. The method of embodiment 14 or 15, wherein the plurality of files is a plurality of Java files.
17. The method of any one of embodiments 14 to 16, wherein the plurality of files comprises: a step file comprising steps corresponding to the at least one test scenario of the testing definition file.
18. The method of embodiment 17, wherein the step file further comprises hooks that are used before and after the steps corresponding to the at least one test scenario.
19. The method of any one of embodiments 14 to 18, wherein the plurality of files comprises: an application test file that defines the execution of the plurality of test cases for the application.
20. The method of embodiment 19, wherein the application test file defines the execution of the plurality of test cases for the application as a unified test suite.
21. The method of any one of embodiments 14 to 20, wherein the plurality of files comprises: a hook file that defines hooks used by a step file before and after the steps corresponding to the at least one test scenario.
22. The method of embodiment 21, wherein the hook file comprises a before hook that defines steps performed before the steps corresponding to the at least one test scenario.
23. The method of embodiment 22, wherein the steps performed before the steps corresponding to the at least one test scenario comprise start component steps for the one or more components.
24. The method of any one of embodiments 21 to 23, wherein the hook file comprises an after hook that defines steps performed after the steps corresponding to the at least one test scenario.
25. The method of embodiment 24, wherein the steps performed after the steps corresponding to the at least one test scenario comprise stop component steps for the one or more components.
26. The method of any one of embodiments 14 to 25, wherein the plurality of files comprises: an integration file that defines the integration between a predefined BDD framework of the testing definition file (optionally the same BDD framework mentioned in embodiments 5 or 6) and a predefined application development framework of the application (optionally the same application development framework mentioned in embodiment 4).
27. The method of any one of embodiments 14 to 26, wherein the plurality of files comprises one or more component files corresponding to the one or more components of the local emulated cloud environment.
28. The method of embodiment 27, wherein each of the one or more component files defines start component and stop component steps for one of the component files.
29. The method of embodiment 27 or 28, wherein the one or more component files comprise one or more of: a data repository component file; a message notification component file; and a message queue component file.
29. The method of embodiment 29, wherein the one or more component files comprise: a first data repository component file; a second data repository component file different from the first data repository component file; a message notification component file; and a message queue component file.
30. The method of any one of embodiments 14 to 29, wherein the plurality of files comprises: a local emulated cloud environment file defining static parameters for the one or more components of the local emulated cloud environment.
31. The method of any one of embodiments 11 to 30, wherein, prior to generating the offline emulator based on the testing definition file, the offline emulator generator receives: a directory path to the testing definition file; a directory path to a step definition file to be generated; and a package name for the step definition file to be generated.
32. The method of any one of embodiments 11 to 31, wherein prior to generating the offline emulator based on the testing definition file, the offline emulator generator receives a plurality of dependencies relating to a predefined application development framework according to which the application is built and/or the testing definition file format.
33. The method of any preceding embodiment, wherein at least one of the one or more cloud services is a data repository service and wherein at least one of the one or more components is a data repository component.
34. The method of embodiment 33, wherein the data repository service is NoSQL database.
35. The method of embodiment 34, wherein the data repository service is Amazon DynamoDB.
36. The method of embodiment 33, wherein the data repository service is object storage.
37. The method of embodiment 36, wherein the data repository service is Amazon Simple Storage Service, S3.
38. The method of any preceding embodiment, wherein at least one of the one or more cloud services is a message notification service and wherein at least one of the one or more components is a message notification component.
39. The method of embodiment 38, wherein the message notification service is a pub/sub messaging service.
40. The method of embodiment 39, wherein the message notification service is Amazon Simple Queue Service, SNS.
41. The method of any preceding embodiment, wherein at least one of the one or more cloud services is a message queue service and wherein at least one of the one or more components is a message queue component.
42. The method of embodiment 41, wherein the message queue service is a distributed message queue service.
42. The method of embodiment 42, wherein the message queue service is Amazon Simple Queue Service, SQS.
43. The method of any preceding embodiment, wherein the one or more cloud services comprise at least two of: a data repository service; a message notification service; and a message queue service, and wherein the one or more components comprise a corresponding at least two of: a data repository component; a message notification component; and a message queue component.
44. The method of any preceding embodiment, wherein the one or more cloud services comprise: a first data repository service; a second data repository service different from the first data repository service; a message notification service; and a message queue service, and wherein the one or more components comprise: a first data repository component; a second data repository component different from the first data repository service; a message notification component; and a message queue component.
45. The method of embodiment 44, wherein the cloud environment is an Amazon Web Services, AWS, environment, and wherein: the first data repository service is Amazon DynamoDB, the second data repository service is Amazon S3; the message notification service is Amazon SNS; and the message queue service is Amazon SQS.
46. The method of any preceding embodiment, where at least one of the one or more cloud services is a compute service and wherein at least one of the one or more components is a compute service component.
47. The method of embodiment 47, wherein the compute service is an event-driven compute service.
48. The method of embodiment 47, wherein the compute service is AWS Lambda.
49. The method of embodiment 48, wherein the application is an AWS Lambda function.
50. The method of any preceding embodiment, wherein the local emulated cloud environment is hosted on the computer.
51. The method of any preceding embodiment, wherein the local emulated cloud environment is not connected to the cloud environment.
52. The method of any preceding embodiment, wherein initialising the local emulated cloud environment comprises executing a before hook.
53. The method of embodiment 52, wherein the before hook comprises start component steps for the one or more components.
54. The method of any preceding embodiment, wherein terminating the local emulated cloud environment comprises executing an after hook.
55. The method of embodiment 54, wherein the after hook comprises stop component steps for the one or more components.
56. A method of obtaining an offline estimator for locally testing an application for a cloud environment, wherein the application is dependent upon one or more cloud services in the cloud environment, and wherein the computer stores a testing definition file, the testing definition file defining a plurality of test cases for the application according to at least one test scenario, the method comprising: generating, by an offline emulator generator, the offline emulator based on the testing definition file, wherein the offline emulator is configured to locally execute, and record result data from the execution of, the application for each of the plurality of test cases in a local emulated cloud environment configured to support execution of the application.
57. A computer for locally testing an application for a cloud environment, the computer configured to perform the method of any preceding embodiment.
58. A computer program for locally testing an application for a cloud environment, wherein the computer program includes instructions that, when executed by a computer, causes the computer to perform the method of any one of embodiments 1 to 56.
59. A non-transitory computer readable medium for locally testing an application for a cloud environment, wherein the computer readable medium includes instructions that, when executed by a computer, causes the computer to perform the method of any one of embodiments 1 to 56.

## Claims

1. A computer-implemented method for locally testing an application for a cloud environment, wherein the application is dependent upon one or more cloud services in the cloud environment, and wherein the computer stores a testing definition file, the testing definition file defining a plurality of test cases for the application according to at least one test scenario, the method comprising:
obtaining an offline emulator based on the testing definition file, wherein the offline emulator is configured to locally execute, and record result data from the execution of, the application for each of the plurality of test cases in a local emulated cloud environment configured to support execution of the application; and
executing the offline emulator, wherein executing the offline emulator comprises:
initialising the local emulated cloud environment, wherein the local emulated environment comprises one or more components configured to imitate the functionality of the one or more cloud services in the cloud environment;
executing, in the local emulated cloud environment, the application for each test case according to the at least one test scenario; and
outputting test result data from the execution of the application; and
terminating the local emulated cloud environment.

2. The method of claim 1, wherein obtaining an offline emulator based on the testing definition file comprises generating, by an offline emulator generator, the offline emulator based on the testing definition file.

3. The method of claim 2, wherein generating the offline emulator based on the testing definition file comprises: generating, by the offline emulator generator, a step definition file formed of a plurality of files defining code for executing the offline emulator.

4. The method of claim 3, wherein the plurality of files comprises:
a step file comprising steps corresponding to the at least one test scenario of the testing definition file.

5. The method of claim 3 or 4, wherein the plurality of files comprises:
an application test file that defines the execution of the plurality of test cases for the application.

6. The method of any one of claims 3 to 5, wherein the plurality of files comprises:
a hook file that defines hooks used by a step file before and after the steps corresponding to the at least one test scenario.

7. The method of any one of claims 3 to 6, wherein the plurality of files comprises:
an integration file that defines the integration between a predefined behaviour-driven development framework of the testing definition file and a predefined application development framework of the application.

8. The method of any one of claims 3 to 7, wherein the plurality of files comprises:
one or more component files corresponding to the one or more components of the local emulated cloud environment.

9. The method of claim 8, wherein the one or more component files comprise one or more of:
a data repository component file;
a message notification component file; and
a message queue component file.

10. The method of any one of claims 3 to 9, wherein the plurality of files comprises:
a local emulated cloud environment file defining static parameters for the one or more components of the local emulated cloud environment.

11. The method of any preceding claim, wherein at least one of the one or more cloud services is a data repository service and wherein at least one of the one or more components is a data repository component.

12. The method of any preceding claim, wherein at least one of the one or more cloud services is a message notification service and wherein at least one of the one or more components is a message notification component.

13. The method of any preceding claim, wherein at least one of the one or more cloud services is a message queue service and wherein at least one of the one or more components is a message queue component.

14. A computer for locally testing an application for a cloud environment, the computer configured to perform the method of any preceding claim.

15. A computer program for locally testing an application for a cloud environment, wherein the computer program includes instructions that, when executed by a computer, causes the computer to perform the method of any one of claims 1 to 13.
